# EUROPÄISCHE PATENTANMELDUNG

(11) **EP 0 828 137 A2**
(43) Veröffentlichungstag der Anmeldung: **11.03.1998**
(21) Anmeldenummer: 97102240.5
(22) Anmeldetag: 13.02.1997
(51) Int. Cl.: G01B 11/24, G01B 11/30, G01B 9/021

(54) **Anordnung zur Prüfung von Oberflächen**

(30) Priorität: 09.09.1996 DE 19636386
(71) Anmelder: ROBERT BOSCH GMBH, 70442 Stuttgart (DE)
(72) Erfinder: Drabarek, Pawel, 75233 Tiefenbronn (DE)

(57) **Zusammenfassung**

Die Erfindung bezieht sich auf eine interferometrische Meßanordnung zur Prüfung von Oberflächen mit mindestens zwei synthetischen Hologrammen, wobei aus einer einfallenden Strahlung mindestens zwei Teilstrahlen gebildet werden, von denen der eine nach Beugung in dem ersten Hologramm an der Oberfläche reflektiert und auf eine Stelle des zweiten Hologramms gerichtet wird, auf die der zweite Teilstrahl unmittelbar auftrifft, so daß sich ein für die Oberfläche charakteristisches Interferenzmuster ergibt. Bei einfachem Aufbau ist auch die Prüfung einer Oberfläche in einer Sacklochbohrung dadurch möglich, daß das erste Hologramm als Reflexionshologramm ausgebildet ist und daß der andere Teilstrahl ein an dem Reflexionshologramm unter der Beugungsordnung 0 reflektierter Strahl ist.

## Beschreibung

### Stand der Technik

Die Erfindung bezieht sich auf eine interferometrische Meßanordnung zur Prüfung von Oberflächen mit mindestens zwei synthetischen Hologrammen, bei der aus einer einfallenden Strahlung mindestens zwei Teilstrahlen gebildet werden, von denen der eine nach Beugung in dem ersten Hologramm auf die Oberfläche gerichtet und im weiteren Verlauf auf eine Stelle des weiteren Hologramms gelenkt ist, auf die auch der andere, nicht auf die Oberfläche gelenkte Teilstrahl auftrifft, und bei der ein durch diese Überlagerung der beiden Teilstrahlen gebildetes Interferenzmuster die Information über die Oberflächenform trägt.

Eine derartige interferometrische Meßanordnung ist in der DD 106 769 C1 als bekannt ausgewiesen. Bei dieser bekannten Meßanordnung sind axial vor und hinter einem zylinderförmigen Prüfling synthetische, computererzeugte Transmissionshologramme angeordnet. Ein von dem in Strahlungsrichtung vor dem Prüfling angeordneten Transmissionshologramm gebeugter Teilstrahl wird auf die gekrümmte Oberfläche des Prüflings gerichtet und von dort auf eine Stelle des in Strahlungsrichtung hinter dem Prüfling angeordneten Transmissionshologramms gerichtet, auf die auch der durch das vordere Transmissionshologramm ungebeugt durchtretende Teilstrahl trifft. Hinter dem hinteren Transmissionshologramm entsteht dadurch ein Interferenzmuster, das bei der vorgesehenen Form des Prüflings z.B. eine gleichmäßige Ausleuchtung aufweist, während es bei Formabweichung ein davon abweichendes Interferenzmuster zeigt.

Eine weitere derartige interferometrische Meßanordnung ist auch in Thomas Dresel, Johannes Schwider, Alexander Wehrhahn, Sergey Babin, Grazing incidence interferometry applied to measurement of cylindrical surfaces, Optical Engineering, Vol 34, No. 12, 3531-3535, 1995 angegeben. Diese Meßanordnungen eignen sich für die Prüfung von Durchgangsbohrungen.

### Vorteile der Erfindung

Der Erfindung liegt die Aufgabe zugrunde, eine interferometrische Meßanordnung der eingangs genannten Art bereitzustellen, die auch z.B. für die Messung von Sacklochbohrungen oder dgl. geeignet ist.

Diese Aufgabe wird mit den im Patentanspruch 1 angegebenen Merkmalen gelöst. Hiernach ist also vorgesehen, daß das erste Hologramm als Reflexionshologramm ausgebildet ist und daß der andere Teilstrahl ein an dem Reflexionshologramm unter der Beugungsordnung 0 reflektierter Strahl ist.

Das Reflexionshologramm kann auch im Innern eines hohlen Prüflings untergebracht werden und ist damit z.B. für die Überprüfung von Sacklochbohrungen geeignet. Die Oberflächenform muß dabei nicht zylinderförmig sein, da mittels der computerhergestellten Hologramme eine Abstimmung auf Soll-Oberflächen derart erfolgen kann, daß bei der Soll-Form ein gleichmäßig ausgeleuchtetes Interferenzmuster entsteht, während bei Abweichung von der Soll-Form ein abweichendes Interferenzmuster entsteht. Der Aufbau der Meßanordnung ist dabei einfach.

Alternativ wird die Aufgabe mit einer interferometrischen Meßanordnung gemäß Anspruch 5 gelöst. Auch mit dieser Anordnung ist bei einfachem Aufbau eine Messung der Oberfläche innerhalb eines Sacklochs möglich, wobei nur der eine zur Erzeugung des Interferenzmusters ausgenutzte Teilstrahl an dem Reflexionshologramm und anschließend an der inneren Oberfläche des Prüflings reflektiert wird, während der andere Teilstrahl außerhalb des Prüflings über eine Umlenkanordnung auf das weitere Hologramm zur Erzeugung des Interferenzmusters gelenkt wird.

Der Aufbau gemäß dem ersten Ausführungsbeispiel kann mit wenigen optischen Bauelementen derart ausgeführt sein, daß im Strahlengang vor dem Reflexionshologramm ein Strahlteiler angeordnet ist, den die einfallende Strahlung zumindest teilweise geradlinig durchläuft, und daß die beiden Teilstrahlen mittels des Strahlteilers auf das als Transmissionshologramm ausgebildete weitere Hologramm gelenkt werden. Dabei ist eine günstige Meßanordnung derart aufgebaut, daß der Strahlteiler so angeordnet ist, daß die von dem Reflexionshologramm in 0. Beugungsordnung reflektierte Strahlung rechtwinklig auf das seitlich beabstandete, parallel zur einfallenden Strahlung angeordnete Transmissionshologramm gerichtet ist. Hierdurch liegt das Transmissionshologramm seitlich außerhalb der einfallenden Strahlung, und das Interferenzmuster kann leicht ausgewertet werden.

Für eine Vereinfachung der Auswertung ist es ferner günstig, wenn das Transmissionshologramm oder Reflexionshologramm zur Auswertung mittels Phase-Shift-Interferometrie oder Heterodyninterferometrie mittels einer Bewegungseinrichtung in vorgegebener Weise bewegt wird. Die Phase-Shift-Interferometrie und die Heterodyninterferometrie sind an sich bekannt, wozu z.B. auf die DE 43 17 064 A1 und die EP 491 749 sowie darin genannte weitere Literaturstellen hingewiesen sei. Im Prinzip werden dabei Änderungen von Phasendifferenzen ausgewertet, wobei eine günstige Modulationsfrequenz gewählt ist.

Bei der zweiten Ausführungsform besteht ein vorteilhafter Aufbau darin, daß die Umlenkanordnung als senkrecht zu dem anderen Teil der einfallenden Strahlung angeordneter Spiegel ausgebildet ist, daß das als Transmissionshologramm ausgebildete weitere Hologramm dem Spiegel gegenüberliegend auf der anderen Seite des Strahlteilers angeordnet ist und daß der von dem Reflexionshologramm in der Beugungsordnung 0 reflektierte andere Teilstrahl mittels einer zwischen dem Reflexionshologramm und dem Strahlteiler angeordneten Lambdahalbe-Platte/Polarisator-Einrichtung abgehalten ist. Dieser Aufbau besteht aus wenigen, relativ einfach zu justierenden optischen Bauteilen.

Auch bei der zweiten Ausführungsform ist eine einfache, genaue Auswertung mittels Phase-Shift-Interferometrie oder Heterodyninterferometrie möglich, wenn vorgesehen ist, daß der Spiegel zur Auswertung mittels Phase-Shift-Interferometrie oder Heterodyninterferometrie in vorgegebener Weise in Normalenrichtung mittels einer Bewegungseinrichtung bewegt ist.

Bewegte Teile bei Auswertung mittels der Phase-Shift-Interferometrie oder Heterodyninterferometrie werden dadurch vermieden, daß die einfallende Strahlung zur Auswertung mittels Phase-Shift-Interferometrie oder Heterodyninterferometrie eine vorgegebene Frequenzverschiebung aufweist, wobei die unterschiedlich langen Wege des an dem Reflexionshologramm über die innere Oberfläche des Prüflings reflektierten Teilstrahls und des über die Umlenkanordnung geführten Teilstrahls ausgenutzt werden.

Mit den genannten Maßnahmen sind sehr genaue Messungen möglich, wie sie z.B. für Aggregate der Dieseleinspritztechnik gefordert werden.

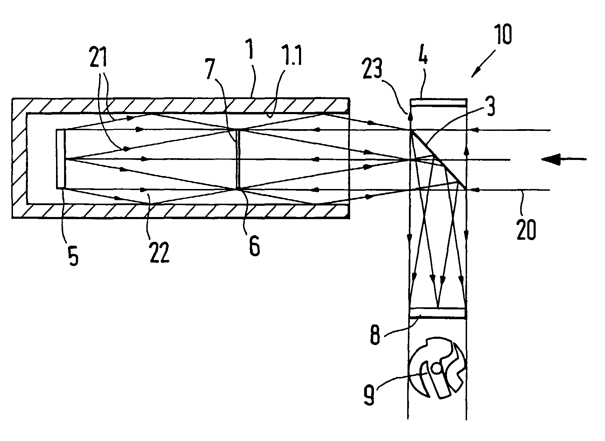

Die Erfindung wird nachfolgend anhand von Ausführungsbeispielen unter Bezugnahme auf die Zeichnung näher erläutert.

Die Fig. zeigt eine interferometrische Meßanordnung 10. Diese weist ein in einer Sacklochbohrung eines Prüflings 1 senkrecht zur Achse des Prüflings angeordnetes Reflexionshologramm 5 sowie ein seitlich von einer einfallenden Strahlung 20 angeordnetes Transmissionshologramm 8 auf. Vor dem Prüfling 1 ist außerdem ein Strahlteiler 3 angeordnet, auf den die einfallende Strahlung 20 auftrifft. Auf der dem Transmissionshologramm 8 gegenüberliegenden Seite des Strahlteilers 3 ist ein Spiegel 4 angeordnet. In dem Sackloch des Prüflings 1 ist zwischen der Eingangsöffnung des Sacklochs und dem Reflexionshologramm 5 eine Blockiereinrichtung mit einem Polarisator 6 und einer Lambdahalbe-Platte 7 angeordnet, mit der ein von dem Reflexionshologramm 5 in 0. Beugungsordnung reflektierter Teilstrahl 22 bei Bedarf abgeblockt wird.

Bei einem ersten Ausführungsbeispiel fehlen die Blockiereinrichtung mit dem Polarisator 6 und der Lambdahalbe-Platte 7 sowie auch der Spiegel 4. Die einfallende Strahlung 20 tritt durch den Strahlteiler 3 in die Sacklochbohrung ein und fällt auf das Reflexionshologramm 5. Auf diesem werden zwei Teilstrahlen 21 und 22 gebildet, wobei der eine Teilstrahl 21 z.B. der in der ersten Beugungsordnung reflektierte Teilstrahl und der andere Teilstrahl der in der 0.Beugungsordnung reflektierte Teilstrahl ist. Der eine Teilstrahl 21 fällt in flachem Winkel auf die innere Oberfläche 1.1 des Prüflings 1, wobei der Einfallswinkel so flach ist, daß die gegenüber der Wellenlänge bei Metallen üblicherweise deutlich größeren Rauhtiefen sich nicht störend auswirken. Der eine Teilstrahl 21 wird an der inneren Oberfläche 1.1 reflektiert und anschließend mittels des Strahlteilers 3 auf das Transmissionshologramm 8 gerichtet. Der andere, in 0.Beugungsordnung reflektierte Teilstrahl 22 gelangt ohne Reflexion an der Oberfläche des Prüflings 1 unmittelbar auf den Strahlteiler 3 und wird ebenfalls auf das Transmissionshologramm 8 gerichtet. Die beiden Teilstrahlen ergeben beim Durchgang durch das Transmissionshologramm 8 ein Interferenzmuster, das die Information der geprüften inneren Oberfläche 1.1 trägt. Das Reflexionshologramm 5 und das Transmissionshologramm 8 sind synthetisch beispielsweise mittels Computer hergestellt und auf die Form der zu messenden Oberfläche 1.1 abgestimmt, so daß sich bei fehlerfreier Oberfläche 1.1 als Soll-Zustand eine gleichmäßige Ausleuchtung des Interferenzmusters 9 einstellt, während bei Formabweichung deutliche Leuchtdichtestrukturen bzw. Streifen erkennbar sind, aus denen eine Formabweichung erkennbar ist.

Bei einem weiteren Ausführungsbeispiel sind die in der Figur gezeigte Blockiereinrichtung mit der Lambdahalbe-Platte 7 und dem Polarisator 6 sowie der Spiegel 4 vorhanden. Auch hierbei tritt die einfallende Strahlung 20 durch den Strahlteiler 3, wobei jedoch ein Teil 23 der einfallenden Strahlung rechtwinklig auf den Spiegel 4 gelenkt und von diesem auf das auf der anderen Seite des Strahlteilers 3 angeordnete Transmissionsgitter 8 fällt. Der durch den Strahlteiler 3 gelassene Teil der einfallenden Strahlung 20 fällt in die Sacklochbohrung und gelangt über den Polarisator 6 und die Lambdahalbe-Platte 7 auf das Reflexionshologramm 5. Der in der ersten Beugungsordnung an dem Reflexionshologramm 5 gebeugte Teilstrahl 21 wird an der inneren Oberfläche 1.1 des Prüflings 1 reflektiert und an dem Strahlteiler 3 auf das Transmissionshologramm 8 abgelenkt, wo er sich mit dem anderen Teil 23 der einfallenden Strahlung überlagert, so daß sich auch hierbei ein Interferenzmuster 9 ergibt, das eine Abweichung von einer Soll-Form angibt. Der von dem Reflexionshologramm 5 in 0.Beugungsordnung reflektierte Teilstrahl 22 wird mittels der Blockiereinrichtung mit der Lambdahalbe-Platte 7 und dem Polarisator 6 vor einem Auftreffen auf das Transmissionshologramm 8 abgehalten.

Die beschriebenen interferometrischen Meßanordnungen 10 können zur weiteren, besseren Auswertung mit einer Einrichtung für eine Phase-Shift-lnterferometrie oder Heterodyninterferometrie ausgestattet sein.

Beim ersten Ausführungsbeispiel kann dabei das Transmissionshologramm oder Reflexionshologramm 5 in vorbestimmter Weise bewegt werden, so daß sich aus der Modulation der Phasendifferenz der beiden Teilstrahlen die Prüfergebnisse ableiten lassen. Zu der Phase-Shift-Interferometrie und der Heterodyninter-ferometrie sei im einzelnen auf die bereits erwähnte EP 491 749 und die DE 43 17 064 A1 sowie darin genannte weitere Literaturstellen hingewiesen.

Bei dem zweiten Ausführungsbeispiel kann der Spiegel 4 in Normalenrichtung mit einer geeigneten Bewegungsfrequenz verschoben werden oder die einfallende Strahlung 20 kann eine Frequenzverschiebung z.B. durch Ansteuern eines die einfallende Strahlung 20 abgebenden Lasers aufweisen. Der dabei erforderliche optische Umweg wird durch die beiden verschieden langen Teilstrahlen 21 und 23 gebildet; bei dieser Technik ist kein bewegliches Teil erforderlich.

Die beschriebenen Maßnahmen lassen bei relativ einfachem Aufbau sehr genaue Vermessungen von Oberflächen beispielsweise auch innerhalb von Sacklöchern zu.

## Patentansprüche

1. Interferometrische Meßanordnung zur Prüfung von Oberflächen mit mindestens zwei synthetischen Hologrammen, bei der aus einer einfallenden Strahlung mindestens zwei Teilstrahlen gebildet werden, von denen der eine nach Beugung in dem ersten Hologramm auf die Oberfläche gerichtet und im weiteren Verlauf auf eine Stelle des weiteren Hologramms gelenkt ist, auf die auch der andere, nicht auf die Oberfläche gelenkte Teilstrahl auftrifft, und bei der ein durch diese Überlagerung der beiden Teilstrahlen gebildetes Interferenzmuster die Information über die Oberflächenform trägt,
dadurch gekennzeichnet,
daß das erste Hologramm als Reflexionshologramm (5) ausgebildet ist und
daß der andere Teilstrahl ein an dem Reflexionshologramm (5) unter der Beugungsordnung 0 reflektierter Strahl ist.

2. Meßanordnung nach Anspruch 1,
dadurch gekennzeichnet,
daß im Strahlengang vor dem Reflexionshologramm (5) ein Strahlteiler (3) angeordnet ist, den die einfallende Strahlung (20) zumindest teilweise geradlinig durchläuft, und
daß die beiden Teilstrahlen (21, 22) mittels des Strahlteilers (3) auf das als Transmissions-hologramm (8) ausgebildete weitere Hologramm gelenkt werden.

3. Meßanordnung nach Anspruch 2,
dadurch gekennzeichnet,
daß das Transmissionshologramm oder Reflexionshologramm (5) senkrecht zur einfallenden Strahlung (20) ausgerichtet ist und
daß der Strahlteiler (3) so angeordnet ist, daß die von dem Reflexionshologramm (5) in 0. Beugungsordnung reflektierte Strahlung rechtwinklig auf das seitlich beabstandete, parallel zur einfallenden Strahlung (20) angeordnete Transmissionshologramm (8) gerichtet ist.

4. Meßanordnung nach einem der vorhergehenden Ansprüche,
dadurch gekennzeichnet,
daß das Reflexionshologramm (5) zur Auswertung mittels Phase-Shift-Interferometrie oder Heterodyninterferometrie mittels einer Bewegungseinrichtung in vorgegebener Weise bewegt wird.

5. Interferometrische Meßanordnung zur Prüfung von Oberflächen mit mindestens zwei synthetischen Hologrammen, bei der aus einer einfallenden Strahlung mindestens zwei Teilstrahlen gebildet werden, von denen der eine nach Beugung in dem ersten Hologramm auf die Oberfläche gerichtet und im weiteren Verlauf auf eine Stelle des weiteren Hologramms gelenkt ist, auf die auch der andere, nicht auf die Oberfläche gelenkte Teilstrahl auftrifft, und bei der ein durch diese Überlagerung der beiden Teilstrahlen gebildetes Interferenzmuster die Information über die Oberflächenform trägt,
dadurch gekennzeichnet,
daß das erste Hologramm als Reflexionshologramm (5) ausgebildet ist,
daß im Strahlengang vor dem Reflexionshologramm (5) ein Strahlteiler (3) angeordnet ist, den ein Teil der einfallenden Strahlung (20) durchläuft und von dem ein anderer Teil (23) der einfallenden Strahlung (20) als der andere Teilstrahl über eine Umlenkanordnung (4) auf das weitere Hologramm (8) gerichtet ist und
daß ein an dem Reflexionshologramm (5) in der Beugungsanordnung 0 reflektierter anderer Teilstrahl (22) vor einem Auftreffen auf das weitere Hologramm (8) abgehalten ist.

6. Meßanordnung nach Anspruch 5,
dadurch gekennzeichnet,
daß die Umlenkanordnung als senkrecht zu dem anderen Teil (23) der einfallenden Strahlung (20) angeordneter Spiegel (4) ausgebildet ist,
daß das als Transmissionshologramm (8) ausgebildete weitere Hologramm dem Spiegel (4) gegenüberliegend auf der anderen Seite des Strahlteilers (3) angeordnet ist und
daß der von dem Reflexionshologramm (5) in der Beugungsordnung 0 reflektierte andere Teilstrahl (22) mittels einer zwischen dem Reflexionshologramm (5) und dem Strahlteiler (3) angeordneten Lambdahalbe-Platte/Polarisator-Einrichtung (6,7) abgehalten ist.

7. Meßanordnung nach Anspruch 5 oder 6,
dadurch gekennzeichnet,
daß der Spiegel (4) zur Auswertung mittels Phase-Shift-Interferometrie oder Heterodyninterferometrie in vorgegebener Weise in Normalenrichtung mittels einer Bewegungseinrichtung bewegt ist.

8. Meßanordnung nach Anspruch 5 oder 6,
dadurch gekennzeichnet,
daß die einfallende Strahlung (20) zur Auswertung mittels Phase-Shift-Interferometrie oder Heterodyninterferometrie eine vorgegebene Frequenzverschiebung aufweist.
